# EUROPEAN PATENT APPLICATION

(11) **EP 4 674 613 A2**
(43) Date of publication of application: **07.01.2026**
(21) Application number: 25209115.2
(22) Date of filing: 25.10.2023
(51) Int. Cl.: B32B 5/26

(54) **IMPROVED UNIDIRECTIONAL PREPREGS**

(30) Priority: 26.10.2022 GB 202215813
(62) Divisional of application: 23801505.1
(71) Applicant: Hexcel Composites Limited, Duxford, Cambridgeshire CB22 4QB (GB)
(72) Inventor: SEQUEIRA, Leela, Cambridge, CB22 4QB (GB); BLAIR, Dana, Cambridge, CB22 4QB (GB); MITCHELL, Benjamin, Cambridge, CB22 4QB (GB); SNAPE, Michael, Cambridge, CB22 4QB (GB); ROE, Emily, Cambridge, CB22 4QB (GB)
(74) Representative: Willett, Christopher David

(57) **Abstract**

A curable prepreg comprising a structural layer of unidirectional electrically conductive fibres having interstices therebetween, having a first outer face and an essentially parallel second outer face, and comprising thermosetting resin impregnated within the structural layer and present within the interstices, and a first layer of thermosetting resin in contact with the first outer face of the structural layer, wherein the ratio of the electrical conductivity in the x-direction, parallel to the conductive fibres, to the electrical conductivity in the y-direction perpendicular to the conductive fibres, is less than 1000, and wherein the resin content in the structural layer is less than 28.0 wt%.

## Description

### Technical Field

The present invention relates to curable prepreg comprising a structural layer of unidirectional electrically conductive fibres and resin, that provides improved electrical conductivity properties.

### Background

Composite materials have well-documented advantages over traditional construction materials, particularly in providing excellent mechanical properties at very low material densities. As a result, the use of such materials is widely used and their fields of application range from "industrial" and "sports and leisure" to high performance aerospace components.

Prepregs, comprising a fibre or fabric arrangement impregnated with thermosetting resin such as epoxy resin, are widely used in the generation of such composite materials. The resin may be combined with the fibres or fabric in various ways. The resin may be tacked to the surface of the fibrous material, however more usually it partially or completely impregnates the interstices between the fibres. In a common arrangement, a discrete layer of resin remains unimpregnated on the external surface of the prepreg.

Once manufactured, typically a number of plies of such prepregs are "laid-up" as desired and the resulting prepreg stack, i.e. a laminate or preform, is cured, typically by exposure to elevated temperatures, to produce a cured composite structure. Curing may be performed in a vacuum bag which may be placed in a mould for curing. Alternatively the stack may be formed and cured directly in a mould.

When such a laminate is made from a plurality of prepregs that comprise a discrete resin layer, this results in fibre layers interleafed with discrete resin layers. Such an arrangement is known to provide desirable mechanical properties in any resulting cured composite material.

However, lightning strikes on aircraft skins consisting of such composites will likely sustain damage due to energy concentrations. Among the physical phenomena observed from lightning strikes is a phenomenon known as "edge glow," which describes the condition in which a glow of light, combined with particle or plasma ejections appears at the tips or ends of the carbon fibers in the exposed fiber surfaces of composite components in a composite structure. Edge glow is caused by voltage differences between conductive, composite layers, and typically occurs in high current density areas resulting from a lightning strike, where the voltage potential is at its maximum, such as the exposed fiber surfaces. Edge glow is a potential fuel ignition source when it occurs in areas containing fuel or fuel vapor such as in fuel tanks or near fuel lines (collectively referred to herein as "a fuel environment"). The phenomenon occurring at the edge is called "Edge Glow" and the one occurring on the surface is called "Surface Discharge". Both can be considered being an ignition hazard.

Furthermore, the presence of the interleaf layers, being electrically insulating, results in the electrical conductivity in the direction orthogonal to the surface of the laminate, the so-called z-direction, being low, which can exacerbate phenomena such as edge glow, and is generally accepted to contribute to the vulnerability of composite laminates to electromagnetic hazards such as lightning strikes. A lightning strike can cause damage to the composite material which can be quite extensive, and could be catastrophic if occurring on an aircraft structure in flight. This is therefore a particular problem for aerospace structures made from such composite materials.

This edge glow phenomenon may therefore appear during a lightning strike event, especially on composite laminates having low z-direction electrical conductivity. During a lightning strike event, a transient charge with high intensity current travels through the skin and then enters the wing substructure (e.g. structural spar or ribs) because of the fasteners connecting the two composite parts. So typically, in a composite skin/spar assembly, current travels partially on the skin and partially through the spar which represents one of the walls of the fuel tank. The current passes laterally from the fasteners through adjacent composite plies of the spar and tends to travel along the fibers because of the higher electrical conductivity as compared to the resin matrix. This path may generate the typical bright glow or sparks at the spar/rib cap edge, providing the "edge glow" phenomenon.

Additionally, composites for use in aerospace applications must meet exacting standards on mechanical properties. Thus, any improvements in conductivity must not impact negatively on mechanical properties.

A wide range of techniques and methods have been suggested in the prior art to provide electrical conductivity to the z-direction of such composite materials.

WO 2008/056123 discloses how improvements have been made in conductivity by adding hollow conductive particles in the resin interleaf layers, so that they contact the adjacent fibre layers and create an electrical pathway in the z-direction. This relies on bridging across the electrically insulating interleaf layer to the relatively electrically conducting fibre layers (if they are made from e.g. carbon fibre).

WO 2010/150022 A1 teaches the disruption of the interface between the structural layer and the interleaf layer, so as to induce points of contact between adjacent structural layers.

WO 2011/027160 A1 discloses the use of glassy carbon particles in an interlayer having a maximum thickness of 50µm.

WO 2013/186389 A1 and WO 2015/157486 A1 teach that z-direction conductivity can be improved by the addition of potato-shaped graphite in the interleaf layer.

WO 2016/048885 A1 discloses that z-direction conductivity can be increased by use of conductive nano-sized particles and a lightweight carbon veil comprised of randomly arranged carbon fibers located in the interleaf layer.

However, it has been found that prepregs that comprise a layer of unidirectional fibres, e.g. carbon fibres, may still present vulnerabilities to electromagnetic hazards, despite having improved z-direction conductivity, achieved by these technologies.

In particular, when a high current density flows through such a material, the electrical anisotropy of the prepreg can result in large potential differences arising, which can result in electrical breakdowns or hotspots at the edges (referred to as 'edge glow') or on the inner surface of a panel (referred to as 'surface discharge').

Therefore there remains the need for unidirectional prepregs that have improved electromagnetic properties.

### Summary of Invention

The present inventors have found that, although z-direction conductivity is an important consideration in the production of prepregs that have good electromagnetic properties, this is a necessary but sometimes insufficient criterion. This is particularly the case where the prepreg has a fibre layer comprised of unidirectional fibres.

It has been surprisingly found that improved electromagnetic properties can be achieved when such prepregs have an electrical conductivity in the y-direction (i.e. perpendicular to the direction of the unidirectional fibres) that is above some critical value in comparison to the much greater value of the electrical conductivity in the x-direction (i.e. parallel to the direction of the unidirectional fibres). This is surprising because the y-direction conductivity is generally much higher than the z-direction conductivity.

Thus, in a first aspect, the invention relates to a curable prepreg comprising a structural layer of unidirectional electrically conductive fibres having interstices therebetween, having a first outer face and an essentially parallel second outer face, and comprising thermosetting resin impregnated within the structural layer and present within the interstices, and a first layer of thermosetting resin in contact with the first outer face of the structural layer, wherein the ratio of the electrical conductivity in the x-direction, parallel to the conductive fibres, to the electrical conductivity in the y-direction perpendicular to the conductive fibres, is less than 1000.

Thus, the structural layer has a first outer face and an essentially parallel second outer face, the faces each defining an x-y plane separated from each other by a distance equal to the thickness of the structural layer in a z-direction, orthogonal to the x-y plane; and a first layer of thermosetting resin in an x-y plane and in contact with the first outer face of the structural layer having a thickness in the z-direction.

Preferably the ratio of the electrical conductivity in the x-direction to the electrical conductivity in the y-direction, is less than 500, more preferably less than 350. However, it has been found that excellent electrical conductivity properties can be achieved when the ratio of the electrical conductivity in the x-direction to the electrical conductivity in the y-direction, in the range of from 10 to 1000, preferably from 50 to 500.

When the fibres in the structural layer are unidirectional, impregnation of resin into the interstices between them has the possibility of causing the fibres to become spaced apart from each other. Therefore, if the resin content within the structural layer exceeds a critical value there is an apparent reduction of the so-called y-direction electrical conductivity due to the breaking of the physical contact between adjacent electrically conductive fibres. Although the y-direction conductivity may remain high (indeed possibly orders of magnitude higher) in relation to the z-direction conductivity, as it reduces in relation to the x-direction conductivity (which is relatively unaffected by the resin content in the structural layer) it has been observed that this can result in a reduction in the electromagnetic properties of the eventually cured prepreg.

Without wishing to be restricted to any one particular theory, it is believed that this is due to an imbalance in the dissipation of electrical energy in the x-y plane, and thus affects the ability of the cured prepreg to handle the flow of electrical energy in three dimensions. Thus, the present invention provides improved electromagnetic properties by ensuring that not only is the z-direction conductivity an acceptable minimum but also the dissipation properties in the x-y plane are also optimised.

Thus, preferably, prior to and following curing, the electrical conductivity of the prepreg in the z-direction is greater than 6 Sm⁻¹, preferably greater than 15 Sm⁻¹. However, since increases in z-direction generally are achieved by a trade-off with other mechanical properties, it is generally sufficient that the electrical conductivity of the prepreg in the z-direction is no greater than 50 Sm⁻¹. Additionally, when the conductivity in the x-y plane is arranged according to the requirements of the present invention, it has been found that excellent electrical resistance properties can be achieved at these more moderate z-conductivity values.

Preferably, prior to and following curing, the electrical conductivity of the prepreg in the x-direction is greater than 10,000 Sm⁻¹, more preferably greater than 20,000 Sm⁻¹.

Preferably, prior to and following curing, the electrical conductivity of the prepreg in the y-direction is greater than 100 Sm⁻¹, more preferably greater than 300 Sm⁻¹.

In a preferred embodiment, the prepreg comprises a layer of thermosetting resin in contact with the second outer face of the structural layer. The second outer layer will usually be the same composition as the first outer layer and preferably be the same or similar thickness as the first outer layer. In this embodiment, a first and second outer layer combine to become an interleaf layer when a plurality of such prepregs are stacked together, as discussed below.

Such laminar arrangements involving structural fibre layers interleafed with resin layers are known to provide cured composite materials that have excellent mechanical properties. The thickness of the structural layer may vary according to the intended application. However, generally, the thickness of the interleaf layer is in proportion to the thickness of the structural layer. Thus, preferably the ratio of the thickness of the structural layer to the total thickness of the first, and if present second outer resin layers, is 3:1 to 6:1.

Generally, the physical thickness of the structural layer will be governed by the areal weight of the fibres present. However, as mentioned, thicker structural layers generally require thicker resin, or interleaf, layers, in order to provide the desired mechanical properties.

It has been found however that, as the interleaf layer increases in thickness, this has a tendency to reduce the z-direction electrical conductivity, and that prepregs with a thicker interleaf layer are therefore more difficult to produce with acceptable electromagnetic properties. It is believed this may be due to the increase in the size of the interleaf layer in relation to the size of any conductive particles present therein, which reduces their ability to provide a conductive pathway across the resin interleaf layer.

The increased understanding of the importance of electrical conductivity in the x-y plane that the present invention provides, means that acceptable electromagnetic properties can therefore be obtained with thicker interleaf layers than was previously thought possible, and therefore also thicker structural layers, and therefore thicker prepregs. Thicker prepregs that are electrically conductive in three dimensions therefore become possible, which may be advantageous in certain applications.

The structural layer may therefore comprise the conductive fibres with an areal weight of from 10 to 1200 g/m². However, preferably they have an areal weight of greater than 200 g/m², more preferably from 500 to 1200 g/m².

Thus, preferably the structural layer may have a thickness, in the direction perpendicular to the first outer face and the second outer face, of from 10 to 1000 µm. However, preferably they have a thickness greater than 300 µm, preferably from 350 to 1200µm, more preferably from 450 to 800 µm.

Accordingly, the total thickness of the first, and if present second outer resin layers, is generally from 5 to 200 µm. However, preferably they have a thickness of greater than 50 µm, preferably from 60 to 200 µm, more preferably from 70 to 150 µm.

The thermosetting resin may be selected from those conventionally known in the art, such as resins of phenol formaldehyde, urea-formaldehyde, 1, 3, 5-triazine-2, 4, 6-triamine (Melamine), Bismalemide, epoxy resins, vinyl ester resins, Benzoxazine resins, polyesters, unsaturated polyesters, Cyanate ester resins, or mixtures thereof. Epoxy resins are particularly preferred. Curing agents and optionally accelerators may be included as desired.

The thermosetting resins are preferably epoxy resins, The epoxy resin used in resin composition of the invention and/or in the preparation of the prepreg preferably has an Epoxy Equivalent weight (EEW) in the range from 10 to 1500, preferably it has an EEW in the range of from 50 to 500. Suitable epoxy resins may comprise blends of two or more epoxy resins selected from monofunctional, difunctional, trifunctional and/or tetrafunctional epoxy resins.

Suitable difunctional epoxy resins, include those based on: diglycidyl ether of bisphenol F (bisphenol F epoxy resin), e.g. Araldite GY281 and GY285 (Huntsman Advanced Materials), diglycidyl ether of bisphenol A (bisphenol A epoxy resin), e.g. Epon 825 (DER 332-Dow Chemical, Midland, MI), phenol and cresol epoxy novolacs, glycidyl ethers of phenol-aldehyde adducts, glycidyl ethers of aliphatic diols, diglycidyl ether, diethylene glycol diglycidyl ether, aromatic epoxy resins, aliphatic polyglycidyl ethers, epoxidized olefins, brominated resins, aromatic glycidyl amines, heterocyclic glycidyl imidines and amides, glycidyl ethers, fluorinated epoxy resins, glycidyl esters or any combination thereof. Suitable difunctional epoxy resins include GY 281 (also known as LY3581). A difunctional epoxy resin may be used alone or in any suitable combination with other difunctional epoxies

Difunctional epoxy resins may be selected from diglycidyl ether of bisphenol F, diglycidyl ether of bisphenol A, diglycidyl dihydroxy naphthalene, or any combination thereof.

Suitable trifunctional epoxy resins, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl ethers, aliphatic polyglycidyl amines, heterocyclic glycidyl imidines and amides, glycidyl ethers, epoxidised olefins; brominated resins, aromatic glycidyl amines; fluorinated epoxy resins or any combination thereof. Suitable trifunctional epoxy resins are available from Huntsman Advanced Materials (Monthey, Switzerland) under the trade names MY0500 and MY0510 (triglycidyl para-aminophenol) and MY0600 and MY0610 (triglycidyl meta-aminophenol). Triglycidyl meta-aminophenol is also available from Sumitomo Chemical Co. (Osaka, Japan) under the trade name ELM-120.

Tetrafunctional epoxy resins are also preferred. It is envisaged that the phenyl ring may additionally be substituted with other suitable non-epoxy substituent groups. Suitable substituent groups, by way of example, include hydrogen, hydroxyl, alkyl, alkenyl, alkynyl, alkoxyl, aryl, aryloxyl, aralkyloxyl, aralkyl, halo, nitro, or cyano radicals. Suitable non-epoxy substituent groups may be bonded to the phenyl ring at the para or ortho positions, or bonded at a meta position not occupied by an epoxy group.

Suitable tetrafunctional epoxy resins include N,N,N',N'-tetraglycidyl-m-xylenediamine (available commercially from Mitsubishi Gas Chemical Company (Chiyoda-Ku, Tokyo, Japan) under the name Tetrad-X), and Erisys GA-240 (from CVC Chemicals, Morrestown, N.J.) and N, N, N', N' - tetraglycidylmethylenedianiline (e.g. MY720 and MY0721 from Huntsman Advanced Materials). Other suitable multifunctional epoxy resins include DEN438 (from Dow Chemicals, Midland, MI), DEN439 (from Dow Chemicals), Araldite ECN 1273 (from Huntsman Advanced Materials), MY722 (from Huntsman Advanced Materials), and Araldite ECN 1299 (from Huntsman Advanced Materials).

It is preferred that at least one of the multifunctional epoxies has at least one meta-substituted phenyl ring in its backbone. Preferred multifunctional epoxy resins are those that are trifunctional or tetrafunctional. Most preferably, the multifunctional epoxy resin will be a combination of trifunctional and multifunctional epoxies. The multifunctional epoxy resins may be saturated, unsaturated, cylcoaliphatic, alicyclic or heterocyclic.

The resin systems may comprise a thermoplastic material which is soluble in the epoxy resin such as polyethersulphone, to improve the toughness of the resin. Exemplary thermoplastic toughening agents/particles include any of the following thermoplastics, either alone or in combination: polyamides, copolyamides, polyimides, aramids, polyketones, polyetheretherketones, polyesters, polyurethanes, polysulphones, polyethersulfones, high performance hydrocarbon polymers, liquid crystal polymers, PTFE, elastomers, and segmented elastomers.

A suitable toughening agent, by way of example, are PES particles sold under the tradename Sumikaexcel 5003P, which is commercially available from Sumitomo Chemicals. Alternatives to 5003P are Solvay polyethersulphone 105RP, or the non-hydroxyl terminated grades such as Solvay 1054P.

The resin also suitably comprises curing agents and curing agent accelerators. Cure accelerators are usually heat activated and shorten the time taken to cure the resin. Suitable curing agents are the amines, including aromatic amines, e.g., 1,3-diaminobenzene, 1,4-diaminobenzene, 4,4'-diamino-diphenylmethane, and the polyaminosulphones, such as 4,4'-diaminodiphenyl sulphone (4,4'-DDS--available from Huntsman), 4-aminophenyl sulphone, and 3,3'- diaminodiphenyl sulphone (3,3'-DDS).

In a preferred embodiment, the resin may comprise a combination of one or more of the following components: a tri-glycidyl aminophenol in the range of from 8 to 34 wt%, a bisphenol epoxy in the range of from 20 to 28 wt%, a tetra-glycidyl amine in the range of from 25 to 35 wt%, a toughener in the form of a polyethersulphone in the range of from 10 to 25 wt%, a curing agent in the form of diaminodiphenylsulfone (4, 4' DDS or 3, 3' DDS) in the range of from 2 to 28% by weight of the resin.

In a preferred embodiment the resin in the first, and if present, second, outer resin layers comprise thermoplastic polymer particles. The thermoplastic polymer should be insoluble in the resin, typically an epoxy resin at room temperature and at the elevated temperatures at which the resin is cured. Depending upon the melting point of the thermoplastic polymer, it may melt or soften to varying degrees during curing of the resin at elevated temperatures and re-solidify as the cured laminate is cooled.

The thermoplastic particles are polymers, which can be in the form of homopolymers, copolymers, block copolymers, graft copolymers, or terpolymers. The thermoplastic particles may be thermoplastic resins having single or multiple bonds selected from carbon-carbon bonds, carbon-oxygen bonds, carbon-nitrogen bonds, silicon-oxygen bonds, and carbon-sulphur bonds. One or more repeat units may be present in the polymer which incorporate the following moieties into either the main polymer backbone or to side chains pendant to the main polymer backbone: amide moieties, imide moieties, ester moieties, ether moieties, carbonate moieties, urethane moieties, thioether moieties, sulphone moieties and carbonyl moieties. The thermoplastic particles can also have a partially cross-linked structure. The particles may be either crystalline or amorphous or partially crystalline.

Suitable thermoplastics include polyamides, polycarbonates, polyacetal, polyphenylene oxide, polyphenylene sulphide, polyacrylates, polyethers, polyesters, polyimides, polyamidoimides, polyether imides, polyurethanes. Polyamides are the preferred type of thermoplastic particles. The polyamide particles may be made from polyamide 6 (PA6), polyamide 12 (PA12), polyamide 11 (PA11), or any combination thereof. Preferred thermoplastic particles are polyamide particles that have a melting point of from about 140°C to 240°C. The particles suitably have particle sizes of less than 100µm. It is preferred that the particles range in size from 5 to 60 microns and more preferably from 10 to 30 microns. It is preferred that the average particle size be around 20 microns. Suitable toughener particles include Orgasol 1002 D NAT1 (PA6), Rilsan PA11 P C20HT (PA11) and Ultramid 4350 (PA6T), Vestamid 1010 and 610. The particles can be made by anionic polymerization in accordance with PCT application WO2006/051222, by coextrusion, precipitation polymerization, emulsion polymerization or by cryogenic grinding. It is preferred that the particles are made by direct polymerization rather than by grinding or precipitation

Since the resin needs to be electrically conductive and the majority needs to be thermosetting resin, the amount of toughener particles needs to be carefully regulated. It has been found to be desirable that the thermoplastic particles are present at a level of from 5 to 15 wt% based on the total resin in the prepreg

Typically, the fibres in the structural layer will generally have a circular or almost circular cross-section with a diameter in the range of from 3 to 20 µm, preferably from 5 to 12 µm.

Exemplary layers of unidirectional fibres are made from HexTow^{™} carbon fibres, which are available from Hexcel Corporation. Suitable HexTow^{™} carbon fibres for use in making many unidirectional fibre layers include: IM5 carbon fibres, which are available as 6,000, 12,000 and 24,000 filaments; IM7 carbon fibres, which are available as fibres that contain 6,000 or 12,000 filaments and weigh 0.223 g/m and 0.446 g/m respectively; IM8-IM10 carbon fibres, which are available as fibres that contain 12,000 filaments and weigh from 0.446 g/m to 0.324 g/m; and AS7 carbon fibres, which are available in fibres that contain 12,000 and 24,000 filaments and weigh 0.800 g/m and 1.600 g/m respectively. The tows typically have a width of from 3 to 7 mm and are fed for impregnation on equipment employing combs to hold the tows and keep them parallel and unidirectional, as discussed below.

The fibres may be any suitable electrically conductive fibres, for example selected from the list consisting of carbon fibres, metalised glass fibres, graphite fibres, metallised polymers and mixtures thereof, preferably carbon fibres.

In the context of the present invention, the z-direction conductivity may be provided by any suitable method. However, preferably, the first, and if present, second, outer resin layers comprise electrically conductive particles, in order to provide the z-direction electrical conductivity.

The electrically conductive particles may comprise metal particles, carbon particles, such as glassy carbon particles, or graphite particles (such as potato shaped graphite). Preferably the electrically conductive particles are metal-coated particles, such as metal coated glass or graphite particles. The preferred conductive particles are CVD (chemical vapor deposition) carbon coated graphite Preferred electrically conductive particles include SG25/99.95 SC from NGS Naturgraphit of Germany, which has an average particle size of from 10 to 30µm, and GHDR-15-4 from Nippon Power Graphite Company of Japan which has an average particle size of from 10 to 30µm, and has a carbon coating deposited by carbon vapour deposition.Other preferred particles include graphite particles from Westwater with an average size of from 10 to 30 µm, and carbon microballoons from Sigratherm with an average size of from 5 to 80 microns.

Preferably the electrically conductive particles are present at a level of from 5 to 15 wt% based on the total resin in the prepreg.

Preferably the electrically conductive particles have a particle size of from 10 to 80 µm.

The interleaf layer is therefore preferably greater than 10 µm thicker than the size (e.g. mean diameter) of any electrically conductive particles present.

On a weight basis, typically the prepregs comprise from 15 to 70 wt% of curable resin, preferably from 20 to 65 wt%, more preferably from 25 to 50 wt% and most preferably from 25 to 40 wt%. On a volume basis, typically the prepregs comprise from 15 to 70 vol% of curable resin, preferably from 20 to 60 vol%, more preferably from 30 to 50 vol% of the curable resin.

However, care must be taken to ensure that the resin is distributed between the interstices between the fibres of the structural layer and the first, and if present, second, outer resin layers. It has been found that the y-direction conductivity decreases significantly as the resin content in the structural layer increases. Therefore, preferably the resin content in the structural layer is less than 30 wt%, preferably less than 28.0 wt%, preferably less than 26.0 wt%.

It should also be noted that the interstices between the fibres are typically at least partially resin free, to provide an air venting path, so that air that may be present in the tows from the outset, or that may be introduced during impregnation with the liquid resin, is not trapped within the structure. Such air is able to escape along the length of the fibres and also from the second outer face of the structural layer, if there is no second layer of thermosetting resin in contact with the second outer face.

The degree of air in the structural layer is measured by the water pick-up test, which determines the degree of impregnation in the interstices between the fibres. In this test, a specimen of prepreg material is initially weighed and clamped between two plates in such a way that a strip 5mm wide protrudes. This arrangement is suspended in the direction of the fibres in a water bath at room temperature (21°C) for 5 minutes. The specimen is then removed from the plates and weighed again, and the difference in weight provides a value for the degree of impregnation within the specimen. The smaller the amount of water picked up, the higher the degree of impregnation. Prepregs according to the present invention preferably have a water pick-up of less than 6%, more preferably less than 5%, and typically from 2 to 5%.

On a volume basis, typically the prepregs comprise from 45 to 75 vol% of structural fibres, preferably from 55 to 70 vol%.

Resin and fibre content of uncured prepregs or prepreg stacks which contain unidirectional carbon fibres are determined in accordance with DIN EN 2559 A (code A). Resin and fibre content of cured composites which contain carbon fibrous material are determined in accordance with DIN EN 2564 A.

The prepregs according to the invention may be manufactured in known manner, e.g. by the process described and illustrated in WO2010/150022, typically in a continuous process involving the passage of many thousands of fibres, forming a structural layer of fibres, through a series of impregnation stages, typically guided by rollers, which act to impregnate resin into the structural layer.

Before the fibres are contacted with the resin and reach the impregnation zone they are typically arranged in a plurality of tows of fibres, each tow comprising many thousands of filaments, e.g. 12,000. These tows are mounted on bobbins and are fed initially to a combing unit to ensure even separation of the fibres. The structural layer is typically formed from a plurality of tows of fibres, which are spread out to merge together over spreader bars, prior to impregnation with the resin.

In order to improve handling of the resin it is conventional that it is supported onto a backing material, such as paper. The resin is then fed, typically from a roll, such that it comes into contact with the fibres, the backing material remaining in place on the exterior of the resin and fibre contact region. During the subsequent impregnation process the backing material provides a useful exterior material to apply pressure to, in order to achieve even impregnation of resin. Each layer of resin that is applied is sometimes referred to as a film.

During this process of impregnation, resin passes between the interstices of the fibres. As already mentioned. optionally a second impregnating layer (i.e a second film) comprising thermosetting resin is provided, wherein the second face of the fibrous layer is brought into contact with the second impregnating layer prior to the compressing. This may form a second layer of thermosetting resin in contact with the second outer face of the structural layer. Together with the first resin layer, this may eventually become the resin interleaf layer during the laying up of a plurality of prepregs.

This process can be carried out in a single stage (i.e. with one or two resin films applied in a single stage), wherein impregnation occurs with excess resin, such that a first layer of resin (that comprises any particulate material) remains, that eventually becomes the resin interleaf layer during the laying up of a plurality of prepregs. Such a single stage process tends to provide some degree of disruption to the structural layer, which can be advantageous, particularly for electrical conductivity.

Alternatively, resin impregnation may be carried out in a two stage process. This involves a first stage, wherein one or two films of resin are applied to the first, and typically second, face of the fibrous layer. The two resin films may comprise only resin, without any particulate material such as toughener or conductive particles, and is intended to impregnate into the interstices of the fibres, so as to fully 'wet out' the fibrous layer. This impregnation is then followed by a second stage of bringing into contact with another resin, often comprising particulate material, typically toughener particles, intended to lay down the resin layer that will eventually become the interleaf layer when a plurality of such prepregs are stacked together. This second stage is typically carried out after the prepreg passes through a cooling stage. Sometimes this two-stage process is referred to in the art as '4-filming'.

To facilitate impregnation of the resin into the fibres it is conventional for this to be carried out at an elevated temperature, e.g. from 60 to 170°C preferably from 100 to 150°C, so that the resin viscosity reduces, i.e. to from 0.1 Pas to 100 Pas, preferably from 5 to 30 Pas, more preferably from 10 to 20 Pas, and even more preferably from 8 to 17 Pas. This is most conveniently achieved by heating the resin and fibres, before impregnation, to the desired temperature, e.g. by passing them through an infra-red heater.

Resin impregnation typically involves passing the resin and fibres over rollers, which may be arranged in a variety of ways. Two primary arrangements are the "nip" arrangement and the "S-wrap" arrangement.

An S-wrap stage is where the resin and fibres, both in sheet form, pass around two separated rotating rollers in the shape of the letter "S". In the alternative "nip" arrangement the fibre and resin are pinched, or nipped, together as they pass between the pinch point between two adjacent or opposing rotating rollers. It is understood that S-wrap generally provides ideal conditions for reliable and reproducible impregnation of the resin between the interstices of the fibres whilst also providing sufficient disruption. However, nip stages can provide a more intense impregnation, so long as care is taken to control the pressures, e.g. by control over the gap between adjacent rollers.

During this stage, multiple processes are occurring simultaneously, that being the resin impregnation into the interstices of the structural fibre layer, as well as any disruption of the structural layer.

As already discussed, the selection of the impregnation conditions will need to be chosen carefully, e.g. in order to ensure that the desired degree of resin is impregnated into the structural layer such that some disruption of the structural layer occurs, but not so much that such disruption causes separation of the fibres, as this may induce a reduction in the y-direction conductivity. A balance must therefore be found to find the optimal degree of structural layer disruption, according to the particular conditions desired.

Parameters such as separation between rollers, speed, relative speed between rollers and resin and fibres, and the contact area of the rollers can be varied to achieve the desired degree of fibre disruption and also resin impregnation.

Additionally, prior to impregnation, the structural fibres may first be passed over a fibre disrupting means. This causes a proportion of the fibres on an external face of the sheet to become disrupted filaments. The disruption means may generate the disrupted filaments in a number of ways, depending on how the structural fibres are arranged, for example by breaking points of adhesion between structural fibres, and breaking structural fibres into shorter lengths, or individual breaks which permit free ends of filaments to migrate into the interleaf layer of resin. This may be carried out by the process described in WO2011/114140, wherein the disruption means involves passing the fibres over an abrasion surface, thereby causing breakage of a proportion of the fibres on an external face passing in contact with the abrasion surface, whilst the fibres not in contact with the abrasion surface remain unbroken.

As discussed above, unidirectional fibres are typically formed from a plurality of tows of fibres, which are spread out to merge together, prior to impregnation with the resin. A common method of achieving this is to pass the fibres over a plurality of sequential spreader bars or rollers. It is therefore convenient for the abrasion surface to be incorporated into an existing spreader bar arrangement. Thus, preferably the abrasion surface is the surface of a spreader bar.

Multiple sets of S-wrap or nip rollers can be used, with each set gradually increasing the pressure applied to the resin. A typical process may also combine sets of S-wrap and Nip rollers in the same production line.

Following impregnation there is typically a cooling step, to reduce the tackiness of the formed prepreg. This may be followed by further treatment stages such as laminating, slitting and separating.

Once prepared the prepreg may be rolled-up so that it can be stored for a period of time. In view of the tacky nature of such materials, a backing sheet is generally provided to enable the roll to be unfurled at the point of use. Thus, preferably the prepreg according to the invention may comprise a backing sheet on an external face to facilitate handling of the material and/or rolling up of the material. It can then be unrolled and cut as desired.

When it is desired to manufacture a composite material, a number of such prepregs are typically stacked together, producing a prepreg stack or preform.

Thus, in a second aspect, the invention relates to a plurality of prepregs as described therein, thereby comprising a plurality of structural layers of conductive fibres and a plurality of resin interleaf layers formed by the first, and if present second, outer resin layer.

In one preferred arrangement, the fibres have an orientation that varies throughout the prepreg stack, for example by arranging for the fibres in neighbouring layers to be orthogonal to each other in a so-called 0/90 arrangement, signifying the angles between neighbouring fibre layers. Other arrangements such as 0/+45/-45/90 are also possible, among many other arrangements.

A preferred use of the prepregs of the present invention is as a tape; the prepregs can be prepared as a roll of material prepared specifically for an automatic tape lay-up device. The prepregs are provided with backing sheets which are removed when they are laid up in a mould. Thus, the prepreg typically provided with a backing sheet is preferably sufficiently flexible so as to be able to form a roll with a diameter of less than 20 cm, preferably less than 10 cm. Known automatic lay-up apparatus requires the roll to satisfy particular dimensions. For example, the roll is either wound onto a 254 mm or 295 mm inside diameter core with a tolerance of ±0.5 mm. The roll can be cut to standard prepreg tape sizes which include 600 mm (24"), 300 mm (12"), 150 mm (6"), 75 mm (3"), 50 mm (2"), 25 mm (1"), 6.34 mm (1/4") and 3.18 mm (1/8") in width, and cut within a tolerance of ± 0.050 mm and then laid-up as several layers of tape and cured. Tapes are frequently used in this way in the production of aircraft components.

An additional advantage of being able to make thicker electrically conductive prepregs, as discussed above, is that such automatic tape lay-up processes can produce a composite material from fewer layers of prepreg, and therefore in a shorter time.

In a third aspect, the invention relates to a cured composite material, obtainable by the process of exposing a prepreg or prepreg stack as described herein, to elevated temperature and optionally elevated pressure, to thermally set the thermosetting resin and thereby produce the cured composite material.

Since the curing processes, discussed below, do not substantially affect the physical arrangement of the resin and conductive fibres, the prepreg or prepreg stack preferably, when cured, can have any of the technical features described in relation to the prepreg alone.

Such a composite material is typically subsequently cured by exposure to elevated temperature, wherein the thermosetting resin cures to provide the resulting cured composite material. The cure cycles employed for curing prepregs and stacks of prepregs are a balance of temperature and time, taking account the reactivity of the resin and the amount of resin and fibre employed. This may be carried out under elevated pressure in known manner, such as the autoclave techniques. Alternatively or additionally, curing may be carried out close to atmospheric pressure, in the so-called vacuum bag technique.

As will be known to a person skilled in the art, such curing processes are generally exothermic, and so care must be taken to prevent excessive temperatures, which can damage any moulds or cause decomposition of the resin.

Typically, the cured resin has a glass transition temperature of from 150°C to 200°C, more preferably from 160°C to 200°C.

Once cured, the prepreg or prepreg stack becomes a composite material, suitable for use in a structural application, for example an aerospace structure.

The invention will now be illustrated, by way of example, and with reference to the following figures, in which:
Figure 1 is a schematic representation of the typical current path during a lightning strike event on a composite wing box generating the "edge glow" phenomenon.
Figure 2 is a schematic representation of a process which may be used to manufacture prepregs of the present invention.

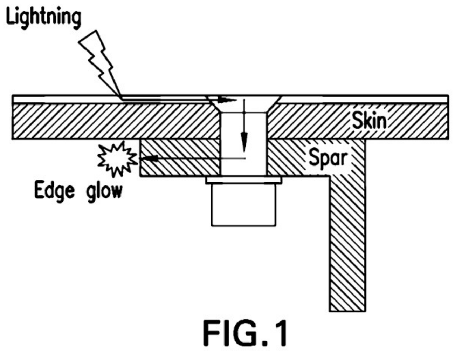

Figure 1 shows the phenomenon of edge glow, when a lightning strike hits an aerospace component comprised of an external skin and an internal spar, made of composite material. As discussed, as the z-direction conductivity is generally low, the current tends not to flow between adjacent plies, building up a potential difference internally. The build up can lead to electron surface ejections or plasma generation at the composite edges and often appears as a kind of resin explosion. Uncertainty regarding the nature of this phenomenon has led to concern regarding ignition of fuel vapours during a lightning strike event.

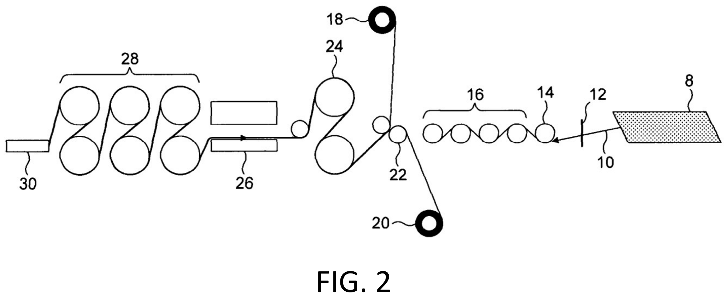

Turning to Figure 2, the process proceeds of prepreg manufacture leads from right to left beginning with a creel unit **8** which can support 370 spools of carbon fibre tows, each tow having 12,000 individual carbon filaments. Each fibre bobbin on the creel is tensioned by a strap and spring arrangement to provide a uniform tow to tow fibre tension to the machine. The tows of fibre pass from the creel to a comb. Before they enter the comb a measurement of individual tow tension is taken at location **10** in Figure 2. Individual 12k carbon fibre tow tensions are measured here with a hand held fibre tensiometer. Fibre break load on the creel from the strap and spring assembly is controlled to provide a fibre tension at this point of around 250 g/tow.

A random selection of ten tows from each of the process webs is measured for quality control and checking the nominal fibre tow tension is at the preferred individual tow tension of 250 g/tow. The fibre tows then pass through a comb **12.** The fibre comb acts to separate the carbon fibre tows and align them into the fibre spreading bar section and control the overall fibre web width so that prepreg fibre areal weight is within required tolerances. The fibre tows then pass onto a load cell roller **14** which measures the global overall applied tension to the carbon fibres. The fibres then pass through spreader bars **16.** These bars control fibre tensioning and spreading to control the final fibre tension and alignment of **10** fibres before they make contact with the resin coated films at the pinch point **22.**

The two bars forming pinch point **22** are locked so they do not rotate, other bars before this do rotate. The first spreader bar **16** is a load cell roller to monitor overall global fibre tension incoming to the spreader bar system. The fibre tows are heated in this spreader bar section by an infrared heater (not shown) in preparation for impregnation by the resin composition. The infrared heater softens the fibre sizing in order to help promote good fibre impregnation. The fibre sizing is an epoxy solution that is applied to the carbon fibre at point of manufacture to aid fibre handling but in some instances the sizing can restrict fibre spreading and impregnation.

The two pre-coated resin film rolls are loaded to the prepreg machine unwinds, one above the prepreg web **18** and one below the prepreg web **20.** These film rolls provide resin that is fed by top film unwind **18** and bottom film unwind **20.** The resin and fibres meet at pinch point **22.** No significant impregnation occurs at this point.

Pre-coated resin films are at nominally 138 gsm for this 536 gsm fibre areal weight product that 34% resin content by weight is achieved in the final product. The resin (including any particulate material) is coated onto the right side of a super calendared double sided differential value silicone release coated paper. Film roll braking tensions at unwinds **18** and **20** are controlled and matched with the final fibre web tension in order to nm a crease free prepreg web through the hot S-wrap impregnation zone **24, 28.** Although a single impregnation stage is shown, comprising the two resin films provided by unwinds **18, 20,** a subsequent resin application stage can be included after chilled plate **30,** which resin is not intended to enter the fibre interstices but rather provides a resin layer that will eventually become a resin interleaf layer when a plurality of such prepregs are laid up. This is sometimes referred to as a 4-film process.

The resin and fibres then pass through the first S-wrap compactor **24** and then through another infra red heating stage **26** for further heating. The prepreg is heated under the IR heater to 120 to 130°C so that resin viscosity is reduced before the web enters the 2nd, 3rd and 4th heated S-wrap roll sets, as shown in Figure 2, for resin impregnation into the structural fibrous layer of 12k carbon fibre tows. At this stage of the process, after the IR heater **26,** the resin has a low enough viscosity for impregnation into the fibres.

The resin and fibres pass through three more S-wrap compactors **28** where the impregnation occurs to produce disrupted fibre layers with reliable and sufficient impregnation. These S-wrap roller sets are heated to 135 to 160°C, are 270 mm diameter and are separated to form a gap between them of 350 to 450 mm. One or more of the S-wrap compactors 28 can be replaced by a pair of compactors in a nip formation, which are usually heated to 105 to 125°C, and have a gap between them of from 500 to 700 microns, e.g. 625 microns (for a prepreg of thickness 500 micron).

The rotational speed on these rollers are controlled so the web wrapping forces are high in order for these forces to act on the prepreg web for disruption of the structural fibre layer and cause high resin flow into the carbon fibres for good impregnation to be achieved. The disruption of the structural fibre layer by the S-wrap wrapping forces has been found to be required for low resistance values and impregnation is needed for success in the automated prepreg tape laying operation in customer processes.

The fibre and resin then passes over a chilled plate **30.** The prepreg web is chilled on this chill plate to cool the prepreg to 20 to 22°C so that a process paper can be removed prior to further conventional processing prepreg processing stages that follow the chill plate and which are not shown here but are known to the skilled person.

### Examples

The carbon fibres of Hextow^{™} IM5 were provided on multiple spools holding the fibre tows. Each fibre tow contained multiple carbon fibre filaments (12000) filaments, each had a diameter of 7 microns. These were arranged to provide a structural layer having 536 gsm of unidirectional carbon fibre filaments.

A resin system comprising trifunctional epoxy resin, bisphenol-F epoxy and 4,4' DDS curing agent was prepared. The resin comprised 6.75 wt% of thermoplastic toughener particles (Orgasol 1002 DNAT1) and 6.75 wt% of electrically conductive particles (Nippon Graphite GHDR-15-4). This was provided as two layers of resin on backing paper, provided by spools 18, 20.

Prepregs were prepared according to the steps outlined above in relation to figure 2 in a 4-filming process. However, variations, wherein a number of S-wrap stages are replaced with nip stages were carried out, in order to vary the forces involved during impregnation.

### Measurement of Conductivity

The electrical conductivity of composite laminates in the z-direction is measured by the following method.

A panel is prepared from multiple unidirectional prepreg layers. The panel is cured by autoclave cure at a temperature of 180°C for 2 hours under a pressure of 0.7 MPa to form a cured panel of 300 mm x 300 mm x 3mm in size. A total of nine specimens are marked in a 3 x 3 square grid arrangement for test, and are then cut from the panel so that these are sized as 40 mm x 40 mm x 3 mm. The square faces of the specimens are sanded on a Linisher machine to expose the carbon fibres. Excess sanding is prevented as this would penetrate past the first ply into the first interleaf layer. The square faces are then coated with a metal such as gold via thermal sputtering to a thickness of approximately 30 nm or tin-zinc to a thickness of at least 10 micrometers via arc-spraying. Any metal on the sides of the specimens is removed by sanding prior to testing.

Each side of the specimens is contacted with a copper braid or wire to form electrodes which extend diagonally across the metal plated surfaces. A power source (TTz EL302P programmable 30V/2A power supply unit, Thurlby Thandar Instruments, Cambridge, UK) which is capable of varying both voltage and current is used to determine the resistance. Two or four electrodes can be used per sample, the latter is preferred as it is more reproducible. The power source is contacted with the electrodes and held in place using a clamp. The clamp has a non-conductive coating or layer to prevent an electrical path from one braid to the other. A current of one ampere is applied and the voltage noted. Using Ohm's Law resistance can then be calculated (R=V/I). The test is carried out on each of the cut specimens to give a range of values. To ensure confidence in the test each specimen is tested twice. To verify the measurement, the resistivity is also measured using a Flux Multimeter by placing one electrode on one plated surface and the other electrode on the opposite plated surface.

From the calculated resistance [Ohms], the conductivity [Siemens/m] is calculated as Conductivity (σ) = thickness of specimen (t)/ {resistance (R) x area of specimen (A)}. Thickness is measured in metres, and the area is the length (in metres) multiplied by the width (in metres).

The electrical conductivity of composite laminates in the x-y plane is measured by the following method.

Minimum 3 rectangular specimens from the panel are tested, and an average value arrived at. Specimen sizes have a length of 100mm and a width of 20 mm in the x-y plane, and a thickness in the z-direction. Thus the specimens have two opposing rectangular ends defined by the width and the thickness. The 0° reference direction in the x-y plane is parallel to the length of the specimen. The panel is placed in a metallic holder and clamped to bring brass plates into contact with the two opposing rectangular ends, so as to clamp the specimen between the brass plates, so that an electrical current can be passed through the specimen along its length. The electrical resistance is measured in direction of the length. In order to ensure a good and reproducible electrical contact the end of the specimen are cleaned and metallization of each end of the specimens is required. The opposing rectangular ends are coated with a metal such as tin-zinc to a thickness around 100 microns (similar to z-conductivity measurements) via arc-spraying.

Electrical resistance is measured with a 4 probe measuring method using TTi EL302P Power Supply Unit (PSU) to supply 1A current and TTi 1906 multimeter to measure voltage.

The resistance (in Ohms) is calculated per Ohm's Law (R=V/I), where I is the current in A, and the conductivity is calculated using the formula Conductivity (σ) = length of specimen (I) / {width (w) x thickness (t) x resistance (R)}

### Example 1

Prepreg stacks were prepared with eleven plies of prepreg with the following lay-up orientation of the unidirectional fibres: -45°, +45°, 90°, -45°, +45°, 0°, +45°, -45°, 90°, +45°, -45°, where the angle is the angle that the unidirectional fibres in the prepreg make relative to an arbitrary 0° direction.

The prepreg stacks were cured in an autoclave with 2°C/min to 180°C for 2 hours and 7 bar pressure.

The values of the z-conductivity were measured by the method described above. The values of the conductivity in the x-y plane was also carried out by the method described above.

The resin content in the fibre layer alone was measured, in order to measure the distribution of the resin between the structural layer and the interleaf layer. This was carried out by analysing images taken by microscopy of the central specimen of the nine specimens. The thickness of the interleaf layer was also measured by analysing images taken by microscopy of the central specimen.

The resulting prepreg stacks were also tested for their ability to pass or fail an 'edge glow' test, which involves passing an electrical current through the panel. Two aluminium fasteners are positioned through the thickness of the panel offset from each other at an angle of 22.5° relative to the 0° direction, so as to prevent any current passing between the fasteners directly along any carbon fibres. A digital camera is employed to detect whether there is an edge glow (i.e. a test fail) or no edge glow (i.e. a test pass).

The results are shown in table 1 below.

**Table 1**

| Example | Prepreg Resin Content (wt%) | Process | Interleaf Thickness (µm) | Resin Content in Fibres (wt%) | Avg. Z-conductivity (S/m) | Avg. x-y conductivity (0) direction | Avg. x-y conductivity (90) direction | Edge Glow test pass? |
|---|---|---|---|---|---|---|---|---|
| 1 | 32 | 1N3S | 69 | 25 | 44.4 | 10889 | 14809 | Pass |
| 2 | 32 | 1N3S | 91 | - | 15.5 | 9639 | 11185 | Pass |
| 3 | 32 | 1N3S | 80 | - | 16.6 | 9202 | 11875 | Pass |
| 4 | 32 | 4S | - | - | 13.2 | 9754 | 13684 | Pass |
| 5 | 32 | 1S3N | - | - | 27.9 | 13908 | 15037 | Pass |
| 6 | 32 | 2S2N | 81 | 23 | 19.6 | 9105 | 12821 | Pass |
| 7 | 32 | 3S1N | 82 | 24 | 30.8 | - | - | Pass |
| 8 | 34 | 2S2N | 94 | 25 | 8.72 | 7733 | 11965 | Pass |
| 9 | 34 | 1N3S | 84 | 27 | 11.7 | 8999 | 11146 | Pass |
| 10 | 36 | 2S2N | 111 | 28 | 5.8 | 6897 | 9561 | Fail |

As could be expected, the conductivity in the 90 direction is consistently greater than the conductivity in the 0 direction. This is due to the fact that two prepregs are aligned with the 90° direction, and only one is aligned with the 0° direction. However, they are comparable in value due to the greater number of prepregs aligned at 45° to each measured direction, which tends to even out the anisotropy in the x-y plane considerably.

It can also be seen that the conductivities in the x-y plane are variable depending upon the type of impregnation process applied. This can be explained by a change in the y-direction conductivity of the prepregs, which is sensitive to the amount of resin present in the interstices of the fibres. It would be expected that the x-direction conductivity remains unaffected. As can be seen, if the resin content reaches or exceeds 28 vol% there is a notable reduction in x-y plane conductivity, and a failure to pass the edge glow test.

### Example 2

The further explore this, four of the sets of prepregs prepared (examples 1, 6, 9 and 10) were formed into stacks of eight plies, all aligned in the 0° direction. The prepreg stacks were cured in an autoclave with 2°C/min to 180°C for 2 hours and 7 bar pressure.

The results are shown in table 2 below.

**Table 2**

| Example | Resin Content (wt%) | Process | Avg Z-conductivity (S/m) | Avg. x-y conductivity (0) direction | Avg. x-y conductivity (90) direction | Ratio of x to y conductivity | Edge Glow test pass? |
|---|---|---|---|---|---|---|---|
| 11 | 32 | 1N3S | 27.5 | 40700 | 540 | 75 | Pass |
| 12 | 32 | 2S2N | 19.6 | 39959 | 118 | 339 | Pass |
| 13 | 34 | 1N3S | 11.7 | 39285 | 242 | 162 | Pass |
| 14 | 36 | 4S2N | 5.8 | 36452 | 35 | 1041 | Fail |

As can be seen, the conductivity in the x-direction (i.e. the 0° direction) is much greater than the conductivity in the y-direction (i.e. the 90° direction). It can also be seen that, provided the ratio of the electrical conductivity in the x-direction, parallel to the conductive fibres, to the electrical conductivity in the y-direction perpendicular to the conductive fibres, is less than 1000, e.g. from 50 to 500, then the edge glow test can be passed, even with a relatively low value of z-direction conductivity.

## Claims

1. A curable prepreg comprising a structural layer of unidirectional electrically conductive fibres having interstices therebetween, having a first outer face and an essentially parallel second outer face, and comprising thermosetting resin impregnated within the structural layer and present within the interstices, and a first layer of thermosetting resin in contact with the first outer face of the structural layer, wherein the ratio of the electrical conductivity in the x-direction, parallel to the conductive fibres, to the electrical conductivity in the y-direction perpendicular to the conductive fibres, is less than 1000, and wherein the resin content in the structural layer is less than 28.0 wt%.

2. A curable prepreg according to claim 1, wherein the ratio of the electrical conductivity in the x-direction to the electrical conductivity in the y-direction, is less than 500.

3. A prepreg according to claim 1 or claim 2, which comprises a second layer of thermosetting resin in contact with the second outer face of the structural layer.

4. A prepreg according to any one of the preceding claims, wherein the ratio of the thickness of the structural layer to the total thickness of the first, and if present second outer resin layers, is 3:1 to 6:1.

5. A prepreg according to any one of the preceding claims, wherein the fibre areal weight of the fibres in the structural layer is greater than 200 g/m², preferably from 500 to 1200 g/m².

6. A prepreg according to any one of the preceding claims, wherein the structural layer has a thickness, in the direction perpendicular to the first outer face and the second outer face, of greater than 300 µm, preferably from 350 to 1200 µm.

7. A prepreg according to any one of the preceding claims, wherein the total thickness of the first, and if present second outer resin layers, is greater than 50 µm, preferably from 70 to 150 µm.

8. A prepreg according to any one of the preceding claims, wherein the resin in the first, and if present, second, outer resin layers comprise thermoplastic particles.

9. A prepreg according to claim 8, wherein the thermoplastic particles are present at a level of from 5 to 15 wt% based on the total resin in the prepreg.

10. A prepreg according to any one of the preceding claims, wherein the electrically conductive fibres are selected from the list consisting of carbon fibres, metalised glass fibres, graphite fibres, metallised polymers and mixtures thereof, preferably carbon fibres.

11. A prepreg according to any one of the preceding claims, wherein the first, and if present, second, outer resin layers comprise electrically conductive particles.

12. A prepreg according to any one of the preceding claims, wherein the resin content in the structural layer is less than 26 wt%.

13. A prepreg stack, comprising a plurality of prepregs according to any one of the preceding claims, thereby comprising a plurality of structural layers of conductive fibres and a plurality of resin interleaf layers formed by the first, and if present second, outer resin layer.

14. A cured composite material, obtainable by the process of exposing a prepreg or prepreg stack according to any one of the preceding claims to elevated temperature and optionally elevated pressure, to thermally set the thermosetting resin and thereby produce the cured composite material.

15. A cured composite material according to claim 14, which forms an aircraft component.
